# EUROPÄISCHE PATENTSCHRIFT

(11) **EP 2 532 914 B1**
(45) Veröffentlichungstag und Bekanntmachung des Hinweises auf die Patenterteilung: **29.07.2020**
(21) Anmeldenummer: 12004231.2
(22) Anmeldetag: 02.06.2012
(51) Int. Cl.: F16D 48/02

(54) **Hydraulische Betätigungsvorrichtung für die Betätigung von Kupplungen in insbesondere einem Mehrkupplungsgetriebe für Kraftfahrzeuge**
Hydraulic actuation device for actuating clutches, particularly in a multi-clutch transmission system for motor vehicles
Dispositif d'actionnement hydraulique pour l'actionnement de couplages, en particulier dans une boîte de vitesses à plusieurs embrayages pour un véhicule automobile

(30) Priorität: 07.06.2011 DE 102011105648
(43) Veröffentlichungstag der Anmeldung: 12.12.2012
(73) Patentinhaber: FTE automotive GmbH, 96106 Ebern (DE)
(72) Erfinder: Heubner, Wilhelm, 96274 Itzgrund (DE)
(74) Vertreter: Oppermann, Mark

(56) Entgegenhaltungen:
- EP-A1- 1 881 222
- EP-A1- 2 020 521
- EP-A2- 2 336 590
- WO-A1-2006/002450

## Beschreibung

### TECHNISCHES GEBIET

Die vorliegende Erfindung bezieht sich auf eine hydraulische Betätigungsvorrichtung für die Betätigung von Kupplungen. Insbesondere bezieht sich die Erfindung auf eine solche Betätigungsvorrichtung, wie sie massenweise in Mehrkupplungsgetrieben für Kraftfahrzeuge zum Einsatz kommen.

### STAND DER TECHNIK

Kupplungen für automatisierte Schaltgetriebe (ASG), Doppel- oder Mehrkupplungsgetriebe (DKG) sowie trennbare Verteiler- und Differentialgetriebe sind als Trocken- oder Nasskupplungen aufgebaut. Ihre Betätigung erfolgt entweder elektromechanisch oder hydraulisch, wobei die hydraulische Betätigung aufgrund der hohen Leistungsdichte der Aktuatoren Vorteile hinsichtlich der räumlichen Anordnung im Getriebe bietet. So können die Kupplungen direkt betätigt werden (mittels sogenannter "Zentralein- bzw. -ausrücker"), und zusätzliche Reibungsverluste durch mechanische Getriebe od.dgl. werden vermieden. Die Anordnung im Getriebe oder zwischen Motor und Getriebe bietet auch Bauraumvorteile gegenüber elektromechanischen Betätigungen, die oft aus der Silhouette des Getriebes herausragen und damit den Einbau des Getriebes im Kraftfahrzeug erschweren.

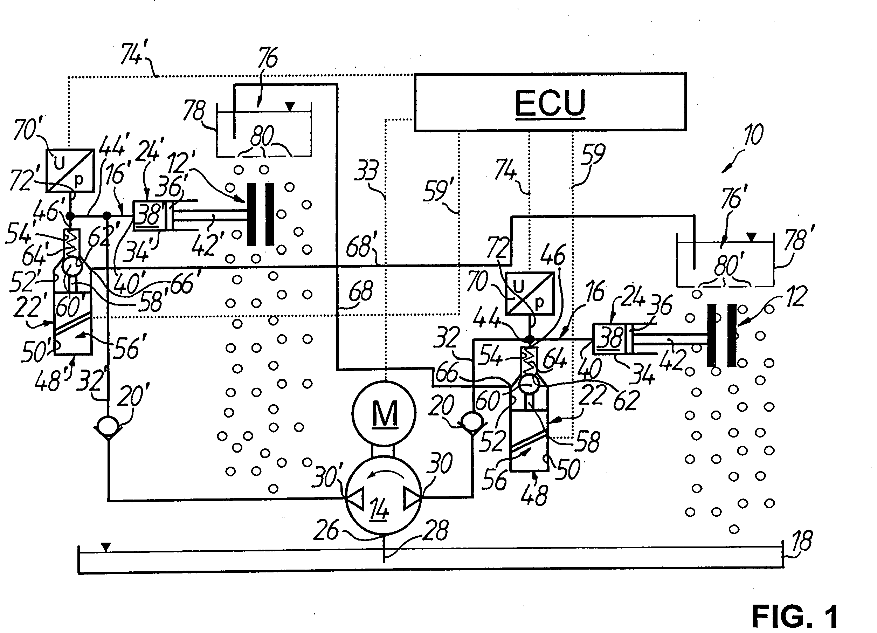

Bekannte hydraulische Betätigungsvorrichtungen (siehe z.B. DE-A-43 09 901, Fig. 1; DE-A-196 37 001, Fig. 27; DE-A-199 50 443, Fig. 11F) bestehen in der Regel aus einer Druckerzeugungs- bzw. Pumpen- und Speichereinheit (sogenanntes "Powerpack"), einem Ventilblock mit mehreren elektromagnetisch betätigbaren Ventilen zur Verteilung der hydraulischen Energie auf die einzelnen Aktuatoren, Leitungen zur Ölführung sowie den Aktuatoren bzw. Zylindern selbst, ggf. mit integrierter Sensorik zur Lagebestimmung der Stellglieder. Die Ansteuerung der hydraulischen Bestätigungsvorrichtung in einem Mehrkupplungsgetriebe für Kraftfahrzeuge erfolgt in der Regel über ein Getriebesteuergerät oder einen übergeordneten Fahrzeugrechner.

Ein Nachteil derartiger hydraulischer Betätigungsvorrichtungen mit Speicher besteht darin, dass das Druckmittel, d.h. die Hydraulikflüssigkeit bei der Speicherladung auf ein Druckniveau weit oberhalb des in den Aktuatoren maximal benötigten Drucks gepumpt werden muss, um nach Entnahme der benötigten Menge noch den erforderlichen Arbeitsdruck bieten zu können, was energetisch ungünstig ist und den Wirkungsgrad der Vorrichtung beträchtlich mindert. Ferner erfordern die überwiegend als Schieberventile ausgeführten Magnetventile aufgrund der engen Spalte eine hohe Ölreinheit und bedingen oftmals Filtermaßnahmen. Dennoch haben die verwendeten Schieberventile eine nicht unerhebliche Leckage, die über eine entsprechende Standzeit zu einer vollständigen Entladung des Speichers führt, was eine Verzögerung der ersten Betätigung um die Speicherladezeit zur Folge hat. Auch beim Fahren ohne Gangwechsel, beispielsweise auf der Autobahn, ist daher ein Nachladen des Speichers in regelmäßigen Zeitabständen erforderlich, was ebenfalls energetisch ungünstig ist. Schließlich nimmt der Ventilblock mit den Magnetventilen einen beträchtlichen Bauraum im Getriebe ein und stellt den größten Kostenfaktor innerhalb der beschriebenen Betätigungsvorrichtung dar.

Weitere hydraulische Betätigungsvorrichtungen für die Betätigung von Kupplungen in einem Doppelkupplungsgetriebe für Kraftfahrzeuge sind aus den Druckschriften WO 2006/002450 A1, EP 1 881 222 A1 und EP 2 020 521 A1 bekannt.

### AUFGABENSTELLUNG

Der Erfindung liegt die Aufgabe zugrunde, für die Betätigung von Kupplungen in insbesondere einem Mehrkupplungsgetriebe für Kraftfahrzeuge eine hydraulische Betätigungsvorrichtung bereitzustellen, welche die obigen Nachteile vermeidet und gegenüber dem geschilderten Stand der Technik vor allem einen deutlich verbesserten Gesamtwirkungsgrad bei geringeren Kosten aufweist.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 4.

Gemäß der Erfindung umfasst eine hydraulische Betätigungsvorrichtung für die Betätigung von Kupplungen in insbesondere einem Mehrkupplungsgetriebe für Kraftfahrzeuge eine mehrkreisige Pumpe, die einen Pumpeneingang, wenigstens zwei Pumpenausgänge und einen elektrischen Pumpenantrieb aufweist, wenigstens zwei Druckkreise, die hydraulisch an die Pumpenausgänge der Pumpe angeschlossen sind, und einen mit dem Pumpeneingang verbundenen Vorratsbehälter für Hydraulikfluid, aus dem das Hydraulikfluid mittels der Pumpe über die Pumpenausgänge zu den Druckkreisen förderbar ist, wobei jeder Druckkreis ausgehend von der Pumpe ein in Richtung der Pumpe sperrendes Rückschlagventil und ein elektromagnetisch betätigbares Proportional-Drosselventil aufweist, über das der jeweilige Druckkreis zum Vorratsbehälter hin definiert hydraulisch entlastbar ist, sowie ausgangs- bzw. kraftabgabeseitig einen Nehmerzylinder, der mit einer zugeordneten Kupplung in Wirkverbindung steht, und wobei der Pumpenantrieb und die Proportional-Drosselventile mit einem Steuergerät elektrisch verbunden sind, welches die elektrische Ansteuerung des Pumpenantriebs und der Proportional-Drosselventile koordiniert.

Soll eine der Kupplungen betätigt werden, ist auf diese Kupplung bezogen kurz gesagt folgende Koordinierung möglich: Über das Steuergerät wird das Proportional-Drosselventil des entsprechenden Druckkreises elektromagnetisch betätigt und der Pumpenantrieb gestartet, worauf der sich in diesem Druckkreis aufbauende Druck den jeweiligen Nehmerzylinder hydraulisch beaufschlagt, welcher seinerseits die Kupplung betätigt. Bei Erreichen des gewünschten Drucks im entsprechenden Druckkreis kann der Pumpenantrieb gestoppt werden, wobei der Druck zwischen dem Rückschlagventil und dem Proportional-Drosselventil dieses Druckkreises eingesperrt bleibt und weiterhin im jeweiligen Nehmerzylinder wirkt. Den jeweiligen Betätigungserfordernissen entsprechend kann dieses Proportional-Drosselventil mittels des Steuergeräts dann so angesteuert werden, dass der entsprechende Druckkreis - und damit der jeweilige Nehmerzylinder - zum Vorratsbehälter hin definiert hydraulisch entlastet wird. Weitere Kupplungen können mittels der weiteren Druckkreise in analoger Weise, ggf. auch gleichzeitig betätigt werden.

Somit ist es auf denkbar einfache Weise und mit im Verhältnis geringem vorrichtungstechnischen Aufwand, mithin geringen Kosten möglich, mehrere Kupplungen in insbesondere einem Mehrkupplungsgetriebe für Kraftfahrzeuge zu betätigen, ohne dass hierfür Speicher erforderlich wären oder Schieberventile - und damit eine erhöhte Ölreinheit - benötigt würden. Weil der nur eine Pumpenantrieb nur dann bestromt werden muss, wenn eine Kupplung betätigt werden soll, und nur so stark, wie es der zur Erzeugung einer Bewegung am jeweiligen Nehmerzylinder im entsprechenden Druckkreis benötigte Arbeitsdruck erfordert, ist die Energiebilanz besser als bei dem vorbeschriebenen Stand der Technik.

Grundsätzlich ist es möglich, bei der Koordinierung der Bestromung von Pumpenantrieb und Proportional-Drosselventil(en) mittels des Steuergeräts nur mit Modellrechnungen zu arbeiten, welche (u.a.) die bekannten Abhängigkeiten zwischen der Bestromung des Pumpenantriebs, der Drehzahl der Pumpe sowie des erzeugten Volumenstroms einerseits und der hydraulischen Wirkflächen im Druckkreis sowie der an der jeweiligen Kupplung aufzubringenden Kräfte andererseits berücksichtigen. Bevorzugt ist es indes, wenn jeder Druckkreis einen Drucksensor aufweist, so dass der am jeweiligen Nehmerzylinder tatsächlich anliegende Druck erfasst und dem Steuergerät zugeführt werden kann, welches hierauf das entsprechende Proportional-Drosselventil und ggf. den Pumpenantrieb geeignet ansteuert.

Vorzugsweise ist jedes Proportional-Drosselventil im nicht angesteuerten Zustand in Durchgangs-Null-Stellung geschaltet, so dass ohne Bestromung des Ventils im jeweiligen Druckkreis kein Druck aufgebaut werden kann. Da somit jeweils zwei Elemente (Pumpenantrieb und Proportional-Drosselventil) angesteuert werden müssen, um eine Bewegung am jeweiligen Nehmerzylinder einzuleiten, ist die Sicherheit gegen Fehlbetätigungen deutlich erhöht.

Schließlich ist es bevorzugt, wenn zwischen einem Auslass des Proportional-Drosselventils eines ersten Druckkreises und dem Vorratsbehälter eine erste Kupplungskühleinrichtung geschaltet ist, die der mit dem Nehmerzylinder eines zweiten Druckkreises wirkverbundenen Kupplung zugeordnet ist, während zwischen einem Auslass des Proportional-Drosselventils des zweiten Druckkreises und dem Vorratsbehälter eine zweite Kupplungskühleinrichtung geschaltet ist, die der mit dem Nehmerzylinder des ersten Druckkreises wirkverbundenen Kupplung zugeordnet ist, so dass das aus dem ersten Druckkreis abfließende Hydraulikfluid über die erste Kupplungskühleinrichtung der Kühlung der Kupplung am zweiten Druckkreis dient, während das aus dem zweiten Drucckreis abfließende Hydraulikfluid über die zweite Kupplungskühleinrichtung der Kühlung der Kupplung am ersten Druckkreis dient. Somit kann in vorteilhafter Weise eine gerade betätigte Kupplung mittels des Hydraulikfluids gekühlt werden, welches aus dem einer gerade nicht betätigten Kupplung zugeordneten Druckkreis im Wesentlichen drucklos über dessen Proportional-Drosselventil abfließt.

Dieses Kühlprinzip lässt sich natürlich auch problemlos auf Systeme mit mehr als zwei Kupplungen übertragen. Im Fall von drei Kupplungen etwa würde die Betätigungsvorrichtung einen ersten Druckkreis für die Betätigung einer ersten Kupplung, mit einem ersten Proportional-Drosselventil, an dessen Auslass eine erste Kupplungskühleinrichtung angeschlossen ist, einen zweiten Druckkreis für die Betätigung einer zweiten Kupplung, mit einem zweiten Proportional-Drosselventil, an dessen Auslass eine zweite Kupplungskühleinrichtung angeschlossen ist, und einen dritten Druckkreis für die Betätigung einer dritten Kupplung, mit einem dritten Proportional-Drosselventil, an dessen Auslass eine dritte Kupplungskühleinrichtung angeschlossen ist, umfassen, wobei die erste Kupplungskühleinrichtung der zweiten Kupplung zugeordnet wäre, die zweite Kupplungskühleinrichtung der dritten Kupplung und schließlich die dritte Kupplungskühleinrichtung der ersten Kupplung. Bei mehr als drei Kupplungen würde man in analoger Weise verfahren.

### KURZE BESCHREIBUNG DER ZEICHNUNGEN

Im Folgenden wird die Erfindung anhand bevorzugter Ausführungsbeispiele unter Bezugnahme auf die beigefügten schematischen Zeichnungen näher erläutert, in denen gleiche Bezugszeichen - ggf. um einen Strich (') oder zwei Striche ('') ergänzt - gleiche bzw. entsprechende Teile kennzeichnen. In den Zeichnungen zeigen:
- Fig. 1: ein Schaltbild einer hydraulischen Betätigungsvorrichtung für die Betätigung von zwei Kupplungen in z.B. einem Doppelkupplungsgetriebe für Kraftfahrzeuge als ein erstes erfindungsgemäßes Ausführungsbeispiel, bei der auch eine Kupplungskühlung für beide als Nasskupplungen ausgebildeten Kupplungen vorgesehen ist, und

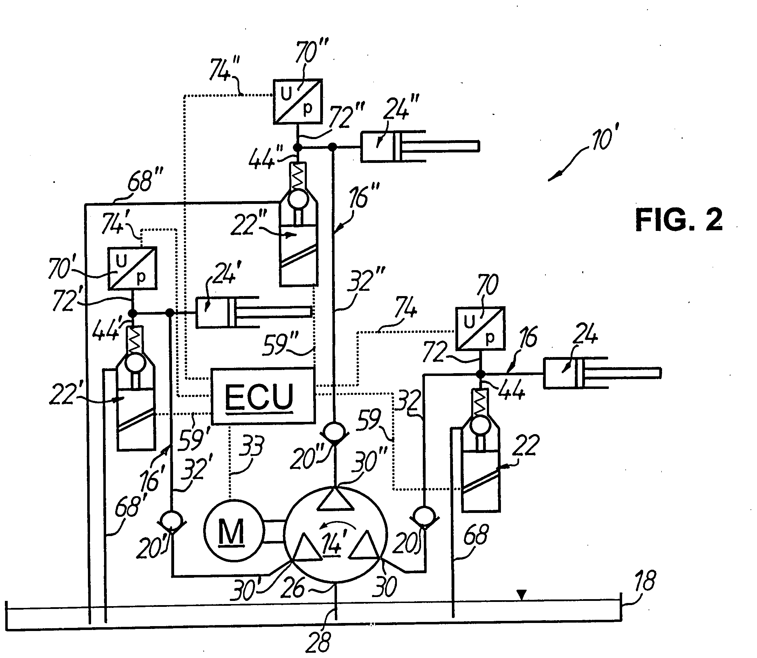

- Fig. 2: ein Schaltbild einer hydraulischen Betätigungsvorrichtung für die Betätigung von drei als Trockenkupplungen ausgebildeten Kupplungen als ein zweites erfindungsgemäßes Ausführungsbeispiel, wie sie beispielsweise in einem Hybrid-Antriebsstrang eines Hybridfahrzeugs zum Einsatz kommen kann, bei dem drei Antriebskomponenten - Benzinmotor, Asynchronmaschine und Schwungrad - ihre Leistung über eine Zwischenwelle durch entsprechende Betätigung der drei Trockenkupplungen und eines stufenlosen Getriebes an die Räder des Hybridfahrzeugs abgeben können.

In den Zeichnungen - und in der folgenden Beschreibung - wurde auf eine Darstellung der über die Kupplungen wirkverbundenen Elemente, d.h. der entsprechenden Teile des Doppelkupplungsgetriebes bzw. des Hybrid-Antriebsstrangs verzichtet, weil diese Elemente und deren Funktion dem Fachmann hinreichend bekannt sind und diesbezügliche Ausführungen für das Verständnis der vorliegenden Erfindung nicht erforderlich erscheinen.

### DETAILLIERTE BESCHREIBUNG DER AUSFÜHRUNGSBEISPIELE

In Fig. 1 beziffert das Bezugszeichen 10 allgemein eine hydraulische Betätigungsvorrichtung für die Betätigung von zwei Nasskupplungen 12, 12'. Wie nachfolgend noch näher beschrieben werden wird umfasst die hydraulische Betätigungsvorrichtung 10 eine mehrkreisige, hier zweikreisige Pumpe 14, die einen elektrischen Pumpenantrieb M aufweist, im dargestellten Ausführungsbeispiel zwei Druckkreise 16, 16', die hydraulisch an die Pumpe 14 angeschlossen sind, und einen Vorratsbehälter 18 für Hydraulikfluid, aus dem das Hydraulikfluid mittels der Pumpe 14 zu den Drucckreisen 16, 16' förderbar ist. Jeder der Druckkreise 16, 16' weist ausgehend von der Pumpe 14 ein in Richtung der Pumpe 14 sperrendes Rückschlagventil 20, 20' und ein elektromagnetisch betätigbares Proportional-Drosselventil 22, 22' auf, über das der jeweilige Druckkreis 16, 16' zum Vorratsbehälter 18 hin definiert hydraulisch entlastbar ist, sowie ausgangsseitig einen Nehmerzylinder 24, 24', der mit der jeweils zugeordneten Nasskupplung 12, 12' in Wirkverbindung steht, wobei der Pumpenantrieb M und die Proportional-Drosselventile 22, 22' mit einem Steuergerät ECU elektrisch verbunden sind, welches die elektrische Ansteuerung des Pumpenantriebs M und der Proportional-Drosselventil 22, 22' bewirkt und koordiniert.

Die Pumpe 14 weist einen Pumpeneingang 26 auf, der über eine Ansaugleitung 28 hydraulisch mit dem Vorratsbehälter 18 verbunden ist. Ferner hat die Pumpe 14 zwei Pumpenausgänge 30, 30', an die Druckleitungen 32, 32' der Druckkreise 16, 16' angeschlossen sind. Als Pumpentypen kommen z.B. in Frage Zahnradpumpen, Rollenzellenpumpen, Flügelzellenpumpen und Radial- oder Axial-Kolbenpumpen, wobei die Mehrkreisigkeit in an sich bekannter Weise durch Parallelschaltung der Verdrängerelemente und/oder geeignete Gestaltung der Pumpengehäuse - wie beispielsweise bei einer zweihubigen Flügelzellenpumpe mit ovaler Hubringform des Stators - gewährleistet wird. Für die vorliegende Anwendung ist es ausreichend, wenn die Pumpe 14 als Konstantpumpe ausgeführt ist, die für eine vorbestimmte Drehzahl des Pumpenantriebs M einen konstanten Volumenstrom liefert. Ggf. kann der Pumpenantrieb M in der Drehzahl steuerbar sein, um auf etwaige Druckschwankungen reagieren zu können und mit kleinen Drehzahlen auch ein "Nachschieben" von Hydraulikfluid in die Druckkreise 16, 16' zu ermöglichen. Die Bestromung bzw. Ansteuerung des Pumpenantriebs M erfolgt im Übrigen über ein in Fig. 1 punktiert eingezeichnetes Versorgungskabel 33, das an das Steuergerät ECU elektrisch angeschlossen ist.

Die Druckleitungen 32, 32' verbinden die Pumpenausgänge 30, 30' hydraulisch mit den Nehmerzylindern 24, 24', wobei in jede Druckleitung 32, 32' eines der Rückschlagventile 20, 20' geschaltet ist. Die Rückschlagventile 20, 20' können in ihre in Richtung der Pumpe 14 sperrende Stellung vorgespannt sein; dies ist in den Figuren jedoch nicht gezeigt.

Die Nehmerzylinder 24, 24' weisen in an sich bekannter Weise jeweils ein Zylindergehäuse 34, 34' auf, in dem ein Kolben 36, 36' längsverschieblich geführt ist. Der Kolben 36, 36' begrenzt zusammen mit dem Zylindergehäuse 34, 34' einen Druckraum 38, 38', der über einen Druckanschluss 40, 40' mit dem Hydraulikfluid beaufschlagbar ist. Hierfür sind die Druckleitungen 32, 32' der Druckkreise 16, 16' an die Druckanschlüsse 40, 40' angeschlossen. Auf der vom Druckraum 38, 38' abgewandten Seite jedes Kolbens 36, 36' ist an diesem eine Kolbenstange 42, 42' angebracht, über die der jeweilige Nehmerzylinder 24, 24' mit der ihm zugeordneten Nasskupplung 12, 12' in Wirkverbindung steht. Wenngleich im dargestellten Ausführungsbeispiel die Nehmerzylinder 24, 24' in "klassischer" Bauart dargestellt sind, kann es sich hierbei - ggf. auch nur z.T. - ebenfalls um sogenannte "Zentralausrücker" oder "-einrücker" handeln, wie sie z.B. in der DE-A-197 16 473 der vorliegenden Anmelderin beschrieben werden.

Zwischen dem Rückschlagventil 20, 20' und dem Nehmerzylinder 24, 24' zweigt von jeder Druckleitung 32, 32' eine Ventilleitung 44, 44' ab, die an einen Druckanschluss 46, 46' des jeweiligen Proportional-Drosselventils 22, 22' angeschlossen ist. Letzteres ist im dargestellten Ausführungsbeispiel als elektromagnetisch betätigbares 2/2 Kugelsitzventil ausgeführt, das im nicht angesteuerten Zustand in Durchgangs-Null-Stellung geschaltet ist - wie es prinzipiell aus der DE-A-196 33 420 (Fig. 4) der vorliegenden Anmelderin bekannt ist.

Demgemäß weist das Proportional-Drosselventil 22, 22' ein dreikammeriges Ventilgehäuse 48, 48' auf, welches eine Ankerkammer 50, 50', eine Ablaufkammer 52, 52' und eine Druckkammer 54, 54' hat, wobei der Druckanschluss 46, 46' in Letzterer mündet. In der Ankerkammer 50, 50' ist ein Magnetantrieb 56, 56' aufgenommen, der aus einem ferromagnetischen Anker und einer den Anker zumindest teilweise konzentrisch umgebenden Magnetspule besteht, die an der radialen Wandung der Ankerkammer 50, 50' befestigt ist (die einzelnen Teile des Magnetantriebs sind in den Figuren nicht näher gezeigt). An dem kolbenartig in der Ankerkammer 50, 50' axial verschiebbaren Anker ist zentrisch ein Ventilbolzen 58, 58' angebracht, der abgedichtet in die Ablaufkammer 52, 52' hineinragt. Durch Bestromung des Magnetantriebs 56, 56' kann der Ventilbolzen 58, 58' über den Anker in axialer Richtung des Ventilgehäuses 48, 48' definiert verschoben werden. Die Bestromung der Magnetantriebe 56, 56' erfolgt hierbei über in Fig. 1 punktiert eingezeichnete Versorgungskabel 59, 59', die elektrisch an das Steuergerät ECU angeschlossen sind.

In der sich axial an die Ankerkammer 50, 50' anschließenden Ablaufkammer 52, 52' ist ein Ventilkörper 60, 60' angeordnet, der als metallische Kugel ausgebildet ist, die über den Ventilbolzen 58, 58' mechanisch mit einer Betätigungskraft beaufschlagt werden kann. Der Ventilkörper 60, 60' kann über den Ventilbolzen 58, 58' nur mit einer Druckkraft beaufschlagt werden, da es sich bei Ventilkörper 60, 60' und Ventilbolzen 58, 58' um zwei separate Bauteile handelt.

An die Ablaufkammer 52, 52' schließt sich die im Durchmesser kleinere Druckkammer 54, 54' an. Am ablaufkammerseitigen Ende der Druckkammer 54, 54' ist zentrisch zur Mittelachse des Ventilgehäuses 48, 48' ein ringförmiger Ventilsitz 62, 62' ausgebildet, der zusammen mit dem Ventilkörper 60, 60' einen Ventilspalt begrenzt, dessen Durchflussquerschnitt dem Drosselquerschnitt des Proportional-Drosselventils 22, 22' entspricht. In der Druckkammer 54, 54' ist eine Rückstellfeder 64, 64' angeordnet, die den Ventilkörper 60, 60' gegen den Ventilbolzen 58, 58' des Magnetantriebs 56, 56' drückt.

In der in den Figuren nicht dargestellten Durchgangs-Null-Stellung der Proportional-Drosselventile 22, 22' ist der jeweilige Ventilspalt zwischen Ventilkörper 60, 60' und Ventilsitz 62, 62' durch die Rückstellkraft der Rückstellfeder 64, 64' maximal geöffnet, wobei der Anker des Magnetantriebs 56, 56' mittelbar über den Ventilkörper 60, 60' und den Ventilbolzen 58, 58' gegen einen Anschlag (nicht gezeigt) am von der Ablaufkammer 52, 52' abgewandten Ende der Ankerkammer 50, 50' gedrückt wird. Der maximal mögliche Hub des Ankers in der Ankerkammer 50, 50' entspricht mindestens dem Schließweg des Ventilspalts zwischen Ventilkörper 60, 60' und Ventilsitz 62, 62', so dass durch axiales Verschieben des Ventilbolzens 58, 58' mittels des Magnetantriebs 56, 56' der Ventilspalt definiert eingestellt werden kann.

Schließlich weist jedes Proportional-Drosselventil 22, 22' einen Ablaufanschluss 66, 66' auf, der in der Ablaufkammer 52, 52' mündet. Über den Ablaufanschluss 66, 66' kann das Hydraulikfluid nach Passieren des ggf. geöffneten Ventilspalts zwischen Ventilkörper 60, 60' und Ventilsitz 62, 62' aus dem Proportional-Drosselventil 22, 22' im Wesentlichen drucklos ablaufen. Hierfür ist an jeden Ablaufanschluss 66, 66' eine Ablaufleitung 68, 68' angeschlossen.

In Fig. 1 ist ferner zu erkennen, dass jeder der Druckkreise 16, 16' einen Drucksensor 70, 70' aufweist. Letzterer ist zwischen dem jeweiligen Rückschlagventil 20, 20' und dem jeweiligen Nehmerzylinder 24, 24' über eine hydraulische Sensorleitung 72, 72' an die jeweilige Druckleitung 32, 32' angeschlossen und erfasst somit den am jeweiligen Nehmerzylinder 24, 24' tatsächlich anliegenden hydraulischen Druck. Elektrische Signalleitungen 74, 74' verbinden die Drucksensoren 70, 70' mit dem Steuergerät ECU.

Bei dem in Fig. 1 dargestellten Ausführungsbeispiel ist des Weiteren eine Kupplungskühlung der Nasskupplungen 12, 12' realisiert. Hierbei ist zwischen dem einen Auslass des Proportional-Drosselventils 22 des einen bzw. ersten Druckkreises 16 bildenden Ablaufanschluss 66 des Proportional-Drosselventils 22 und dem Vorratsbehälter 18 eine erste Kupplungskühleinrichtung 76 geschaltet, die der mit dem Nehmerzylinder 24' des anderen bzw. zweiten Druckkreises 16' wirkverbundenen Nasskupplung 12' zugeordnet ist, während zwischen dem einen Auslass des Proportional-Drosselventils 22' des zweiten Druckkreises 16' bildenden Ablaufanschluss 66' des Proportional-Drosselventils 22' und dem Vorratsbehälter 18 eine weitere bzw. zweite Kupplungskühleinrichtung 76' geschaltet ist, die der mit dem Nehmerzylinder 24 des ersten Druckkreises 16 wirkverbundenen Nasskupplung 12 zugeordnet ist. Die Kupplungskühleinrichtungen 76, 76' können - wie in Fig. 1 angedeutet - z.B. Behältnisse 78, 78' aufweisen, die über die Ablaufleitungen 68, 68' mit Hydraulikfluid versorgt werden und aus denen jeweils über eine oder mehrere Drosselstellen 80, 80' Hydraulikfluid tropfenweise zur Kühlung der jeweiligen Nasskupplung 12, 12' abgegeben wird, welches sich schließlich wieder im Vorratsbehälter 18 sammelt. Im Ergebnis dient das aus dem ersten Druckkreis 16 abfließende Hydraulikfluid über die erste Kupplungskühleinrichtung 76 der Kühlung der Nasskupplung 12' am zweiten Druckkreis 16', während das aus dem zweiten Druckkreis 16' abfließende Hydraulikfluid über die zweite Kupplungskühleinrichtung 76' der Kühlung der Nasskupplung 12 am ersten Druckkreis 16 dient.

Bei dem in Fig. 1 gezeigten System mit zwei Nasskupplungen 12, 12' und Ausführung der Nehmerzylinder 24, 24' als Einrücker ist mit der vorbeschriebenen hydraulischen Betätigungsvorrichtung 10 etwa folgendes Vorgehen möglich, wobei das Steuergerät ECU den Pumpenantrieb M und die Proportional-Drosselventile 22, 22' geeignet ansteuert und koordiniert.

Im nicht aktivierten System sind beide Nasskupplungen 12, 12' getrennt. Die Betätigungsvorrichtung 10 ist entweder komplett stromlos oder der Pumpenantrieb M wird bei Kühlungsbedarf an den Nasskupplungen 12, 12' bestromt, so dass die Pumpe 14 vom Vorratsbehälter 18 Hydraulikfluid in die Druckkreise 16, 16' fördert, während die Proportional-Drosselventile 22, 22' unbestromt bleiben und sich somit in ihrer Durchgangs-Null-Stellung befinden. Im Ergebnis erfolgt über die Kupplungskühleinrichtungen 76, 76' eine gegenseitige Kühlung der Nasskupplungen 12, 12' durch die von den Proportional-Drosselventilen 22, 22' über die Ablaufleitungen 68, 68' abfließenden Volumenströme (Volumenstrom von Ventil 22 auf Kupplung 12', Volumenstrom von Ventil 22' auf Kupplung 12).

Zum Einrücken beispielsweise der in Fig. 1 rechten Nasskupplung 12 werden sowohl der Pumpenantrieb M als auch das entsprechende, d.h. in Fig. 1 rechte Proportional-Drosselventil 22 bestromt, so dass die Pumpe 14 Hydraulikfluid (auch) in den Druckkreis 16 fördert und im Proportional-Drosselventil 22 der Ventilkörper 60 vom Magnetantrieb 56 über den Ventilbolzen 58 entgegen der Kraft der Rückstellfeder 64 gegen den Ventilsitz 62 gedrückt wird. Folglich baut sich in der Druckkammer 54 des Proportional-Drosselventils 22 und damit zwischen dem Rückschlagventil 20 und dem Nehmerzylinder 24 ein Druck auf, der über den Druckraum 38 des Nehmerzylinders 24 auf dessen Kolben 36 wirkt und letztlich zu einer Verschiebung der Kolbenstange 42 zum Einrücken der Nasskupplung 12 führt. Das von der Pumpe 14 zugleich in den anderen Druckkreis 16' gepumpte Hydraulikfluid läuft über das unbestromte, mithin offene Proportional-Drosselventil 22' über die Ablaufleitung 68' zur zweiten Kupplungskühleinrichtung 76' ab und dient somit der Kühlung der eingerückten Nasskupplung 12. In analoger Weise kann die in Fig. 1 linke Nasskupplung 12' eingerückt werden, oder auch beide Nasskupplungen 12, 12' zugleich, wobei in letzterem Fall keine Kühlung erfolgt, wenn die Behältnisse 78, 78' leer sind.

Ist ein Systemzustand mit mindestens einer eingerückten Nasskupplung 12, 12', z.B. der in Fig. 1 rechten Nasskupplung 12 zu halten, wird das entsprechende, d.h. in Fig. 1 rechte Proportional-Drosselventil 22 entsprechend dem benötigten Lastpunkt bestromt, so dass der Druck am Nehmerzylinder 24 über das vorgespannte Proportional-Drosselventil 22 und das Rückschlagventil 20 gehalten wird, ohne dass dabei die Pumpe 14 betrieben werden muss. In analoger Weise kann die in Fig. 1 linke Nasskupplung 12' in einem eingerückten Zustand gehalten werden, oder auch beide Nasskupplungen 12, 12' zugleich.

Eine Drehmomentübergabe von einer auf die andere Nasskupplung 12, 12' kann ferner z.B. wie nachfolgend geschildert ablaufen, ausgehend von beispielsweise folgendem Systemzustand: Rechte Kupplung 12 eingerückt, linke Kupplung 12' ausgerückt, rechtes Ventil 22 bestromt, linkes Ventil 22' und Pumpenantrieb M unbestromt. Zunächst lässt das Steuergerät ECU die Pumpe 14 durch Bestromen des Pumpenantriebs M anlaufen. Dann wird das Proportional-Drosselventil 22 für die in Fig. 1 rechte Nasskupplung 12 kontinuierlich entlastet, wobei der am Magnetantrieb 56 anliegende Ventilstrom entsprechend der bekannten und im Steuergerät ECU abgelegten Kupplungskennlinie der rechten Nasskupplung 12 geregelt wird, so dass der Druck im Druckkreis 16 geeignet sinkt und sich der Kolben 36 im Nehmerzylinder 24 folglich definiert "ausrückend" nach links bewegt. Zugleich wird das Proportional-Drosselventil 22' für die in Fig. 1 linke Nasskupplung 12' bestromt, wobei der am Magnetantrieb 56' anliegende Ventilstrom entsprechend der ebenfalls bekannten und im Steuergerät ECU abgelegten Kupplungskennlinie der linken Nasskupplung 12' geregelt wird, so dass der Druck im Druckkreis 16' geeignet steigt und sich somit der Kolben 36' im Nehmerzylinder 24' definiert "einrückend" nach rechts bewegt. Bei etwa einem Doppelkupplungsgetriebe ist die Stromregelung an den Proportional-Drosselventilen 22, 22' so aufeinander abzustimmen, dass ein zugkraftunterbrechungsfreies Schalten möglich ist. Bei Erreichen der vorgegebenen Drücke in den Druckkreisen 16, 16' und damit der gewollten Positionen der Kolbenstangen 42, 42' an den Nehmerzylindern 24, 24' schaltet das Steuergerät ECU die Pumpe 14 durch Unterbrechung der Bestromung des Pumpenantriebs M ab. Eine Drehmomentübergabe von in Fig. 1 "links" nach in Fig. 1 "rechts" kann natürlich in analoger Weise erfolgen.

Entlastet wird das Gesamtsystem durch komplettes Stromlos-Schalten des Pumpenantriebs M und der Proportional-Drosselventile 22, 22' vermittels des Steuergeräts ECU.

Bei Ausführung der Nehmerzylinder 24, 24' als Ausrücker ist das System einfach umgekehrt zu betreiben, d.h. Belasten zum Trennen der Kupplungen 12, 12' und Entlasten zum Verbinden derselben. Die Ausführung der Kühlung der Nasskupplungen 12, 12' (welcher Ventilrücklaufvolumenstrom über welche Kupplung abfließt) kann im Übrigen aufgrund der Wärmebilanzen üblicher Schaltzyklen erfolgen, d.h. ggf. auch anders als in Fig. 1 gezeigt.

Die vorbeschriebene hydraulische Betätigungsvorrichtung kann je nach Getriebeausführung natürlich auch um weitere Stellerzweige - umfassend jeweils eine weitere Pumpenstufe, ein weiteres Rückschlagventil und ein weiteres Proportional-Drosselventil - erweitert werden, die den jeweiligen Betätigungserfordernissen entsprechend gleichzeitig wie auch zeitversetzt zueinander betrieben werden können.

Nachfolgend soll unter Bezugnahme auf die Fig. 2 das zweite Ausführungsbeispiel nur insoweit beschrieben werden als es sich von dem unter Bezugnahme auf die Fig. 1 beschriebenen ersten Ausführungsbeispiel unterscheidet.

Die hydraulische Betätigungsvorrichtung 10' gemäß Fig. 2 weist im Gegensatz zum ersten Ausführungsbeispiel eine dreikreisige Pumpe 14' auf, bei der es sich z.B. um eine dreihubige Flügelzellenpumpe mit spezieller Statorkurvenbahn ("dreieckig", mit abgerundeten Ecken), die pro Umdrehung mehrere Saug- und Druckhübe erlaubt, handeln kann. An die Pumpe 14' sind insgesamt drei Druckkreise 16, 16', 16" angeschlossen, die sich nicht von den Druckkreisen 16, 16' des ersten Ausführungsbeispiels unterscheiden. Bei den von den Nehmerzylindern 24, 24', 24" des zweiten Ausführungsbeispiels betätigten Kupplungen (in Fig. 2 der besseren Übersichtlichkeit halber nicht gezeigt) handelt es sich allerdings um drei Trockenkupplungen, die insofern einer Flüssigkeitskühlung und damit den Kupplungskühleinrichtungen des ersten Ausführungsbeispiels nicht bedürfen. Im Gegensatz zum ersten Ausführungsbeispiel führen daher beim zweiten Ausführungsbeispiel die Ablaufleitungen 68, 68', 68" von den Proportional-Drosselventilen 22, 22', 22" direkt zurück in den Vorratsbehälter 18.

Für den Fachmann ist ersichtlich, dass auch bei diesem Ausführungsbeispiel die Nehmerzylinder 24, 24', 24" den jeweiligen Betätigungserfordernissen entsprechend durch geeignete Ansteuerung des Pumpenantriebs M und der Proportional-Drosselventile 22, 22', 22" mittels des Steuergeräts ECU hydraulisch beaufschlagt bzw. entlastet werden können, um die jeweiligen Einrück- bzw. Ausrückbewegungen zu erzeugen, wobei insbesondere das Halten des jeweiligen Systemzustands mit im Verhältnis geringem vorrichtungstechnischen Aufwand energetisch sehr günstig erfolgen kann.

Es wird eine hydraulische Betätigungsvorrichtung für die Betätigung von Kupplungen in insbesondere einem Mehrkupplungsgetriebe für Kraftfahrzeuge offenbart, umfassend eine mehrkreisige Pumpe, die einen elektrischen Pumpenantrieb aufweist, wenigstens zwei Druckkreise, die hydraulisch an die Pumpe angeschlossen sind, und einen Vorratsbehälter für Hydraulikfluid, aus dem dieses mittels der Pumpe zu den Druckkreisen förderbar ist. Hierbei weist jeder Druckkreis ausgehend von der Pumpe ein in Richtung derselben sperrendes Rückschlagventil und ein elektromagnetisch betätigbares Proportional-Drosselventil auf, über das der jeweilige Druckkreis zum Vorratsbehälter hin definiert hydraulisch entlastbar ist, sowie ausgangsseitig einen Nehmerzylinder, der mit einer zugeordneten Kupplung in Wirkverbindung steht. Der Pumpenantrieb und die Proportional-Drosselventile sind mit einem Steuergerät elektrisch verbunden, welches die elektrische Ansteuerung des Pumpenantriebs und der Proportional-Drosselventile koordiniert. Im Ergebnis ist bei geringeren Kosten eine Kupplungsbetätigung mit hohem Gesamtwirkungsgrad möglich.

### BEZUGSZEICHENLISTE

- 10, 10': hydraulische Betätigungsvorrichtung
- 12, 12': Nasskupplung
- 14: zweikreisige Pumpe
- 14': dreikreisige Pumpe
- 16, 16', 16": Druckkreis
- 18: Vorratsbehälter
- 20, 20', 20": Rückschlagventil
- 22, 22', 22": Proportional-Drosselventil
- 24, 24', 24": Nehmerzylinder
- 26: Pumpeneingang
- 28: Ansaugleitung
- 30, 30', 30": Pumpenausgang
- 32, 32', 32": Druckleitung
- 33: Versorgungskabel
- 34, 34': Zylindergehäuse
- 36, 36': Kolben
- 38, 38': Druckraum
- 40, 40': Druckanschluss
- 42, 42': Kolbenstange
- 44, 44', 44": Ventilleitung
- 46, 46': Druckanschluss
- 48, 48': Ventilgehäuse
- 50, 50': Ankerkammer
- 52, 52': Ablaufkammer
- 54, 54': Druckkammer
- 56, 56': Magnetantrieb
- 58, 58': Ventilbolzen
- 59, 59', 59": Versorgungskabel
- 60, 60': Ventilkörper
- 62, 62': Ventilsitz
- 64, 64': Rückstellfeder
- 66, 66': Ablaufanschluss
- 68, 68', 68": Ablaufleitung
- 70, 70', 70": Drucksensor
- 72, 72', 72": Sensorleitung
- 74, 74', 74": Signalleitungen
- 76: erste Kupplungskühleinrichtung
- 76': zweite Kupplungskühleinrichtung
- 78, 78': Behältnisse
- 80, 80': Drosselstellen

- ECU: Steuergerät
- M: Pumpenantrieb

## Patentansprüche

1. Hydraulische Betätigungsvorrichtung (10, 10') für die Betätigung von Kupplungen (12, 12') in insbesondere einem Mehrkupplungsgetriebe für Kraftfahrzeuge, mit
einer mehrkreisigen Pumpe (14, 14'), die einen Pumpeneingang (26), wenigstens zwei Pumpenausgänge (30, 30', 30") und einen elektrischen Pumpenantrieb (M) aufweist,
wenigstens zwei Druckkreisen (16, 16', 16"), die hydraulisch an die Pumpenausgänge (30, 30', 30") der Pumpe (14, 14') angeschlossen sind, und
einem mit dem Pumpeneingang (26) verbundenen Vorratsbehälter (18) für Hydraulikfluid, aus dem das Hydraulikfluid mittels der Pumpe (14, 14') über die Pumpenausgänge (30, 30', 30") zu den Druckkreisen (16, 16', 16'') förderbar ist,
wobei jeder Druckkreis (16, 16', 16'') ausgehend von der Pumpe (14, 14')
ein in Richtung der Pumpe (14, 14') sperrendes Rückschlagventil (20, 20', 20") und
ein elektromagnetisch betätigbares Proportional-Drosselventil (22, 22', 22") aufweist, über das der jeweilige Druckkreis (16, 16', 16") zum Vorratsbehälter (18) hin definiert hydraulisch entlastbar ist, sowie
ausgangsseitig einen Nehmerzylinder (24, 24', 24"), der mit einer zugeordneten Kupplung (12, 12') in Wirkverbindung steht, und
wobei der Pumpenantrieb (M) und die Proportional-Drosselventile (22, 22', 22") mit einem Steuergerät (ECU) elektrisch verbunden sind, welches die elektrische Ansteuerung des Pumpenantriebs (M) und der Proportional-Drosselventile (22, 22', 22") koordiniert.

2. Betätigungsvorrichtung (10, 10') nach Anspruch 1, wobei jeder Druckkreis (16, 16', 16") einen Drucksensor (70, 70', 70") aufweist.

3. Betätigungsvorrichtung (10, 10') nach Anspruch 1 oder 2, wobei das Proportional-Drosselventil (22, 22', 22") im nicht angesteuerten Zustand in Durchgangs-Null-Stellung geschaltet ist.

4. Betätigungsvorrichtung (10) nach einem der vorhergehenden Ansprüche, wobei zwischen einem Auslass (66) des Proportional-Drosselventils (22) eines ersten Druckkreises (16) und dem Vorratsbehälter (18) eine erste Kupplungskühleinrichtung (76) geschaltet ist, die der mit dem Nehmerzylinder (24') eines zweiten Druckkreises (16') wirkverbundenen Kupplung (12') zugeordnet ist, während zwischen einem Auslass (66') des Proportional-Drosselventils (22') des zweiten Druckkreises (16') und dem Vorratsbehälter (18) eine zweite Kupplungskühleinrichtung (76') geschaltet ist, die der mit dem Nehmerzylinder (24) des ersten Druckkreises (16) wirkverbundenen Kupplung (12) zugeordnet ist, so dass das aus dem ersten Druckkreis (16) abfließende Hydraulikfluid über die erste Kupplungskühleinrichtung (76) der Kühlung der Kupplung (12') am zweiten Druckkreis (16') dient, während das aus dem zweiten Druckkreis (16') abfließende Hydraulikfluid über die zweite Kupplungskühleinrichtung (76') der Kühlung der Kupplung (12) am ersten Druckkreis (16) dient.

## Claims

1. Hydraulic actuating device (10, 10') for actuation of clutches (12, 12') in, in particular, a multi-clutch transmission for motor vehicles, comprising:
a multi-circuit pump (14, 14') having a pump inlet (26), at least two pump outlets (30, 30', 30") and an electric pump drive (M),
at least two pressure circuits (16, 16', 16") hydraulically connected with the pump outlets (30, 30', 30") of the pump (14, 14') and
a reservoir (18) for hydraulic fluid connected with the pump inlet (26), from which reservoir the hydraulic fluid can be conveyed by the pump (14, 14') via the pump outlets (30, 30', 30") to the pressure circuits (16, 16', 16''),
wherein each pressure circuit (16, 16', 16") starting from the pump (14, 14') comprises
a non-return valve (20, 20', 20") blocking in the direction of the pump (14, 14'),
an electromagnetically actuable proportional throttle valve (22, 22', 22") by way of which the respective pressure circuit (16, 16', 16") can be the subject of defined hydraulic relief in direction towards the reservoir (18), and
at the outlet side a slave cylinder (24, 24', 24") operatively connected with an associated clutch (12, 12'), and
wherein the pump drive (M) and the proportional throttle valves (22, 22', 22") are electrically connected with a control unit (ECU) which co-ordinates the electrical activation of the pump drive (M) and the proportional throttle valves (22, 22', 22").

2. Actuating device (10, 10') according to claim 1, wherein each pressure circuit (16, 16', 16") comprises a pressure sensor (70, 70', 70").

3. Actuating device (10, 10') according to claim 1 or 2, wherein the proportional throttle valve (22, 22', 22") in the non-activated state is switched to a throughflow zero setting.

4. Actuating device (10) according to any one of the preceding claims, wherein connected between an outlet (66) of the proportional throttle valve (22) of a first pressure circuit (16) and the reservoir (18) is a first clutch cooling device (76) which is associated with the clutch (12') operatively connected with the slave cylinder (24') of a second pressure circuit (16'), whilst connected between an outlet (66') of the proportional throttle valve (22') of the second pressure circuit (16') and the reservoir (18) is a second clutch cooling device (76') which is associated with the clutch (12) operatively connected with the slave cylinder (24) of the first pressure circuit (16), so that the hydraulic fluid flowing out of the first pressure circuit (16) serves by way of the first clutch cooling device (76) for cooling the clutch (12') at the second pressure circuit (16'), whilst the hydraulic fluid flowing out of the second pressure circuit (16') serves by way of the second clutch cooling device (76') for cooling the clutch (12) at the first pressure circuit (16).

## Revendications

1. Dispositif d'actionnement (10, 10') hydraulique destiné à actionner des embrayages (12, 12') dans en particulier une transmission à plusieurs embrayages pour des véhicules automobiles, avec
une pompe (14, 14') multicircuit qui présente une entrée de pompe (26), au moins deux sorties de pompe (30, 30', 30") et un entraînement de pompe (M) électrique,
au moins deux circuits de pression (16, 16', 16") qui sont hydrauliquement raccordés aux sorties de pompe (30, 30', 30") de la pompe (14, 14') multicircuit, et
un réservoir (18) pour un fluide hydraulique relié à l'entrée de pompe (26) depuis lequel le fluide hydraulique peut être acheminé jusqu'aux circuits de pression (16, 16', 16") au moyen de la pompe (14, 14') via les sorties de pompe (30, 30', 30"),
dans lequel chaque circuit de pression (16, 16', 16") présente en partant de la pompe (14, 14')
un clapet de non-retour (20, 20', 20") bloquant dans la direction de la pompe (14, 14') et
une soupape d'étranglement proportionnel (22, 22', 22") actionnable de façon électromagnétique via laquelle le circuit de pression (16, 16', 16") respectif défini en allant vers le réservoir (18) pour un fluide hydraulique relié à l'entrée de pompe peut être hydrauliquement déchargé, ainsi que
un cylindre récepteur (24, 24', 24") du côté sortie qui se trouve en liaison fonctionnelle avec un embrayage (12, 12') attribué, et
dans lequel l'entraînement de pompe (M) et la soupape d'étranglement proportionnel (22, 22', 22") sont électriquement reliés à un calculateur (ECU) qui coordonne le pilotage électrique de l'entraînement de pompe (M) et de la soupape d'étranglement proportionnel (22, 22', 22").

2. Dispositif d'actionnement (10, 10') selon la revendication 1, dans lequel chaque circuit de pression (16, 16', 16") présente un capteur de pression (70, 70', 70").

3. Dispositif d'actionnement (10, 10') selon la revendication 1 ou 2, dans lequel la soupape d'étranglement proportionnel (22, 22', 22") dans l'état non piloté est commutée en position de point de passage zéro.

4. Dispositif d'actionnement (10) selon l'une des revendications précédentes, dans lequel entre l'évacuation (66) de la soupape d'étranglement proportionnel (22) d'un premier circuit de pression (16) et le réservoir (18) est monté un premier équipement de refroidissement d'embrayage (76) qui est attribué à l'embrayage (12') en liaison fonctionnelle avec le cylindre récepteur (24') d'un second circuit de pression (16') pendant qu'entre une évacuation (66') de la soupape d'étranglement proportionnel (22') du second circuit de pression (16') et le réservoir (18) est monté un second équipement de refroidissement d'embrayage (76') qui est attribué à l'embrayage (12) en liaison fonctionnelle avec le cylindre récepteur (24) du premier circuit de pression (16), de sorte que le fluide hydraulique s'écoulant depuis le premier circuit de pression (16) via le premier équipement de refroidissement d'embrayage (76) du refroidissement de l'embrayage (12') serve au niveau du second circuit de pression (16') pendant que le fluide hydraulique s'écoulant depuis le second circuit de pression (16') via le second équipement de refroidissement d'embrayage (76') du refroidissement de l'embrayage (12) serve au niveau du premier circuit de pression (16).
